# EUROPÄISCHE PATENTSCHRIFT

(11) **EP 0 499 943 B1**
(45) Veröffentlichungstag und Bekanntmachung des Hinweises auf die Patenterteilung: **08.01.1997**
(21) Anmeldenummer: 92102236.4
(22) Anmeldetag: 11.02.1992
(51) Int. Cl.: G01N 3/32

(54) **Prüfvorrichtung zur Durchführung von 4-Punkt-Biegewechselbeanspruchungsversuchen**
Apparatus for carrying out 4-point alternating bending stress tests
Dispositif pour la mise en oeuvre d'éssais par contraintes en flexion alternées à 4 points d'appui

(30) Priorität: 16.02.1991 DE 4104822
(43) Veröffentlichungstag der Anmeldung: 26.08.1992
(73) Patentinhaber: Daimler-Benz Aerospace Aktiengesellschaft, 81663 München (DE)
(72) Erfinder: Bertele, Ludwig, Dr., W-7912 Weissenhorn (DE); Wichmann, Karl-Heinz, Dr. Dipl.-Chem., W-7959 Achstetten (DE); Papack, André, W-7906 Blaustein (DE)

(56) Entgegenhaltungen:
- DE-A- 3 133 646
- US-A- 3 031 886
- US-A- 3 196 672
- PATENT ABSTRACTS OF JAPAN vol. 12, no. 313 (P-749)(3160) 25. August 1988 & JP-A-63 81 244 ( FUJI ELECTRIC ) 12 April 1988
- SOVIET INVENTIONS ILLUSTRATED Section EI, Week 8507, 27. März 1985 Derwent Publications Ltd., London, GB; Class S, AN 85-042662/07 & SU-A-1 100 531 (AS UKR STRENGHT PROBLEMS) 30 June 1984
- PATENT ABSTRACTS OF JAPAN vol. 13, no. 116 (P-845)(3464) 22. März 1989 & JP-A-63 290 938 ( FUJIKURA ) 28 November 1988

## Beschreibung

Die Erfindung betrifft eine Prüfvorrichtung zur Durchführung von 4-4-Punkt-Biegewechselbeanspruchungsversuchen gemäß Oberbegriff des Patentanspruchs 1. Eine solche Prüfvorrichtung ist aus Patents abstracts of Japan, Vol. 12, No. 313 (P-749) bzw. aus der korrespondierenden JP-A-63-81244 (12/04/88) bekannt.

Prüfvorrichtungen dieser Art werden in der mechanischen Werkstoffprüfung, insbesondere für die Lebensdauer -bzw. Zuverlässigkeitsprüfung von Halbzeug und Bauteilen, insbesondere von Leiterplatten eingesetzt.

Eine solche Prüfvorrichtung ist beispielsweise aus der Firmenschrift der Firma Roell + Korthaus, Amsler-Prüfmaschinen AG (Schaffhausen, Schweiz): "Prüfsysteme", Beschreibung 205, Seiten 8-9 "4-Punkt-Biegevorrichtung" bekannt. Die Prüfvorrichtung besteht aus vier Klemmen zur Probeneinspannung, die durch Federelemente schwenkbar gelagert sind. Diese Art der Probeneinspannung erzeugt allerdings zusätzlich zu den Biegespannungen konstruktionsbedingt unerwünschte Zug- und Druckkräfte in der Probe, sodaß der Hub dieser Prüfvorrichtung laut Herstellerangaben auf ± 0,6 mm beschränkt ist.

In dem Artikel "Untersuchungen zur Zuverlässigkeit von Lötverbindungen in der SMD-Technik" von K.G. Kießling, in: SMT/ASIC/ Hybrid 1990-Kongress, 15.-17.05.1990 in Nürnberg (Hüthig Buch Verlag, Heidelberg, 1990) S. 423-431 ist ferner eine Prüfvorrichtung zur Durchführung von 3-Punkt-Biegewechselbeanspruchungsver-suchen beschrieben. Prüfvorrichtungen dieser Art haben den Nachteil, daß sie die zu untersuchenden Proben mit über die Probelänge linear veränderlichem Biegemoment belasten.

Die aus den eingangs genannten Patents abstracts of Japan, Vol. 12, No. 313 (P-749) bekannte Prüfvorrichtung ist zur Durchführung von 4-Punkt-Biegewechselbeanspruchungsversuchen z.B. an Leiterplatten konzipiert. Sie besteht aus ingesamt vier nebeneinander angeordneten Lagerungen mit jeweils einer Halterung, von denen die beiden inneren vertikal beweglich angeordnet sind und die beiden äußeren feststehend. Die Halterungen der vier Lagerungen weisen jeweils ein Rollenpaar auf, die um ihre Längsachse drehbar gelagert sind und zwischen denen die zu untersuchende Leiterplatte angeordnet ist. Zur Durchführung der 4-Punkt-Biegewechselbeanspruchungsversuche werden die beiden inneren Lagerungen mit Hilfe eines Kolbens vertikal auf- und niederbewegt mit der Folge, daß die zwischen den Rollen der einzelnen Rollenpaare eingespannte Leiterplatte nach oben und nach unten gewölbt bzw. verbogen wird. Bei dieser Bewegung drehen sich die einzelnen Rollen in Abhängigkeit von der Bewegungsrichtung des Kolbens bzw. der beiden beweglichen Lagerungen abwechselnd in die eine oder die andere Richtung. Durch diese Drehbewegungen der einzelnen Rollen werden unerwünschte Zugspannungen zwar vermindert aber nicht ganz beseitigt.

Die Aufgabe der Erfindung besteht darin, eine Prüfvorrichtung der eingangs genannten Art zu schaffen, mit der die zu untersuchenden Proben, insbesondere mit Bauelementen bestückte Leiterplattenproben in 4-Punkt-Biegewechselbeanspruchungsversuchen mit möglichst geringen, der Biegespannung überlagerten Zugspannungen gebogen werden können, wobei der Nullduchgang möglichst spielfrei erfolgen sollte.

Die erfindungsgemäße Lösung der Aufgabe ist im Patentanspruch 1 beschrieben. Die übrigen Ansprüche enthalten vorteilhafte Aus- und Weiterbildungen der Erfindung.

Im folgenden wird die Erfindung anhand der beiden Figuren näher erläutert. Es zeigen:
- FIG. 1: eine bevorzugte Ausführungsform der erfindungsgemäßen Prüfvorrichtung von vorn
- FIG. 2: einen Teil der bevorzugten Ausführungsform der erfindungsgemäßen Prüfvorrichtung gemäß FIG. 1 in einer Seitenansicht.

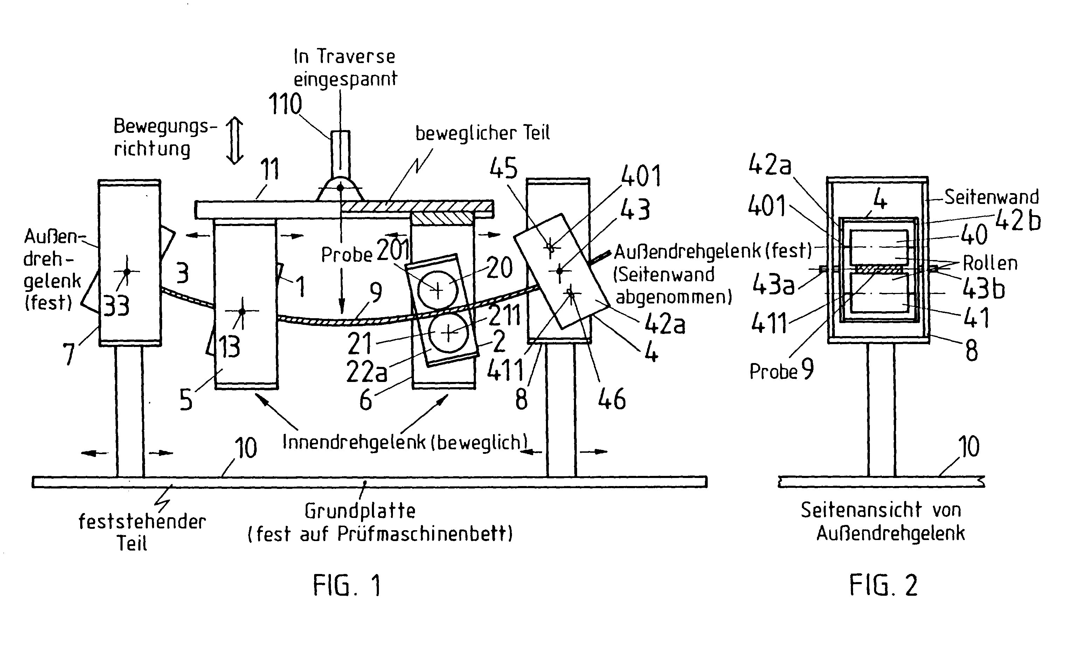

Die Prüfvorrichtung in FIG. 1 besteht aus zwei ähnlich aufgebauten Teilen, von denen der eine Teil feststehend und der andere Teil im Eigenkoordinatensystem der Prüfvorrichtung relativ zu dem feststehenden Teil vertikal beweglich ist (in FIG. 1 angedeutet durch einen Doppelpfeil).

Der bewegliche Teil besteht aus zwei Drehgelenken 1 und 2, die zwischen zwei Drehgelenken 3 und 4 des feststehenden Teils angeordnet sind. Die Drehgelenke 1, 2, 3 und 4 sind jeweils mit Halterungen 5, 6, 7 und 8 versehen, wobei die Halterungen 7 und 8 der beiden Drehgelenke 3 und 4 des feststehenden Teils jeweils an einer Grundplatte 10 einer Prüfvorrichtung befestigt sind, während die Halterungen 5 und 6 der beiden Drehgelenke 1 und 2 an einer Platte 11 des beweglichen Teils dieser Prüfvorrichtung befestigt sind. Die Grundplatte 10 ist (beispielhaft) fest auf dem (nicht gezeigten) Prüfvorrichtungsbett angebracht, die Platte 11 ist wie ein Zugstab mittels eines Zapfens 110 in die (nicht gezeigte) obere Probenaufnahme der Prüfvorrichtung eingespannt und kann in der Vertikalen relativ zur Grundplatte 10 bewegt werden (siehe Doppelpfeil in der FIG.). Als Prüfvorrichtungen dieser Art kommen allgemein Krafteinleitungsvorrichtungen wie z.B. Universal-Werkstoffprüfmaschinen in Betracht. Die Halterungen 7, 8 der beiden drehbaren, aber vertikal feststehenden Drehgelenke 3, 4 sind auf der Grundplatte 10 horizontal, also parallel zur Grundplattenoberfläche verschiebbar, die Halterungen 5, 6 der beiden beweglichen Drehgelenke 1, 2 entsprechend (horizontal) auf der Platte 11 (in der Figur jeweils angedeutet durch horizontal verlaufende Pfeile).

Die einzelnen Drehgelenke 1, 2, 3 und 4 bestehen jeweils im wesentlichen aus einem Rollenpaar, von denen beispielhaft in FIG. 1 das Rollenpaar 20, 21 des beweglichen Drehgelenks 2 und in FIG. 2 das Rollenpaar 40, 41 des vertikal feststehenden Drehgelenks 4 gezeigt sind. Die Rollen der einzelnen Rollenpaare 20, 21 bzw. 40, 41 sind jeweils um ihre Längsachse 201, 211 bzw. 401, 411 drehbar in dem jeweils zugehörigen Drehgelenk 2 bzw. 4 gelagert. Ferner sind die einzelnen Drehgelenke 1, 2, 3 und 4 derart in der jeweils zugehörigen Halterung 5, 6, 7 und 8 drehbar gelagert, daß ihre Drehachsen 13, 23, 33 und 43 mittig zwischen den Längsachsen 201, 211 usw. der beiden jeweils zugehörigen Rollen 20, 21 usw. und parallel zu ihnen liegen.

An dieser Stelle sei nochmals betont, daß der Bezug auf die beiden Drehgelenke 2 und 4 nur als Beispiel aufzufassen ist. Grundsätzlich stimmen die beiden beweglichen Drehgelenke 1 und 2 mit ihren Halterungen 5 und 6 vom Aufbau und von der Funktion her überein wie auch die beiden feststehenden Drehgelenke 3 und 4 mit ihren Halterungen 7 und 8 vom Aufbau und von der Funktion her übereinstimmen.

Die Rollen der einzelnen Rollenpaare 20, 21 bzw. 40, 41 sind mit ihren Längsachsen 201, 211 bzw. 401, 411 parallel zueinander ausgerichtet und in der Nullage (Ausgangsposition) bei unverbogener Probe 9 vertikal übereinander angeordnet. Die Drehachsen 13, 23, 33 und 43 der Drehgelenke 1, 2, 3 und 4 bilden dabei jeweils die gemeinsame Drehachse der beiden Rollen des jeweiligen Rollenpaares.

Wie aus FIG. 2 hervorgeht, bestehen die Drehachsen 13, 23, 33, 43 der einzelnen Drehgelenke 1, 2, 3 und 4 jeweils aus zwei kolinear zueinander angeordneten Achsstummeln 43a, 43b, die über die Rollenenden hinausragen und mechanisch über Seitenwände 22a; 42a, 42b der zugehörigen Drehgelenke 2 bzw. 4 mit den Längsachsen 201, 211 bzw. 401, 411 der zugehörigen Rollen 20, 21 bzw. 40, 41 verbunden sind und in der zugehörigen Halterung 5, 6, 7 und 8 drehbar gelagert sind.

Der Abstand der Rollen eines jeden Rollenpaares 20, 21 bzw. 40, 41 ist für jedes Rollenpaar unabhängig von den übrigen Rollenpaaren stufenlos einstellbar. Die einzelnen Rollen sind dabei mit ihren Längsachsen 201, 211; 401, 411 jeweils in einer Führung 45, 46 in den zugehörigen Drehgelenken 1, 2, 3 und 4 drehbar gelagert und gegen horizontales und/oder vertikales Ausweichen fixiert. Die einzelnen Führungen 45, 46 sind beispielhaft als längliche Nuten in den entsprechenden Seitenwänden der zugehörigen Drehgelenke 1, 2, 3 und 4 ausgebildet.

Die einzelnen Rollenpaare 20, 21 bzw. 40, 41 sind in sich und zueinander derart gehaltert, daß die zu untersuchende Probe 9 zwischen den Rollen der einzelnen Rollenpaare 20, 21 bzw. 40, 41 so eingebracht werden kann, daß eine spiel- und spannungsfreie Einspannung der Probe (9) möglich ist, wobei die einzelnen Fluchtlinien der gemeinsamen Drehachsen 13, 23, 33, 43 der einzelnen Rollenpaare mittig oder zumindest annähernd mittig innerhalb der zu prüfenden Probe 9 verlaufen.

Die Lager der Rollen 20, 21, 40, 41 selbst und/oder die Lager der gemeinsamen Drehachsen 13, 23, 33, 43 bzw. Achsstummel 43a, 43b sind vorzugsweise als Wälz- oder Gleitlager, insbesondere als Kugellager oder Nadellager ausgeführt.

Die Rollen können materialmäßig dem Probenwerkstoff angepaßt werden. Auch eine eventuelle Oberflächenbehandlung wie z. B. Beschichtung (Kunststoff, CVD, PVD usw.) oder Wärmebehandlung ist nach den Erfordernissen der an sich bekannten Wälz- oder Flächenpressungstechnik möglich, ohne daß die übrigen Teile der Prüfvorrichtung geändert werden müssen.

In der Ausgangsposition vor der Durchführung des 4-Punkt-Biegewechselbeanspruchungsversuchs ist der Abstand zwischen der Grundplatte 10 und der beweglichen Platte 11 so gewählt, daß die einzelnen Rollenpaare alle den gleichen oder annähernd den gleichen Abstand von der Grundplatte 10 haben. Der Abstand der Rollen der einzelnen Rollenpaare untereinander ist so gewählt, daß die zu untersuchende Probe 9, z. B. eine Leiterplatte, ohne Schwierigkeiten zwischen die Rollen der einzelnen Rollenpaare eingebracht werden kann. Anschließend werden die einzelnen Rollenpaare in sich und zueinander derart gehaltert und in ihrer Position fixiert, daß eine spiel- und biegebelastungsfreie Einspannung der Probe 9 erfolgen kann.

Danach werden die 4-Punkt-Biegewechselbeanspruchsversuche durchgeführt, indem die Platte 11 vertikal (im Eigenkoordinatensystem der Prüfvorrichtung) um die Ausgangsposition (Ausgangs- oder Nullage) herum auf- und abgeführt wird, wodurch die Probe 9 um die Nullage herum abwechselnd nach oben und nach unten durchgebogen wird. Dadurch, daß zum einen die Rollen 20, 21, 40, 41 selbst jeweils um ihre Längsachse 201, 211, 401, 411 und die Rollenpaare 20, 21 bzw. 40, 41 jeweils um ihre gemeinsame Drehachse 13, 23, 33, 43; 43a, 43b drehbar gelagert sind, können sich die einzelnen Drehgelenke 1, 2, 3 und 4 durch Rollen bzw. Drehen in ihrer Lage zwanglos der sich biegenden Probe 9 anpassen, und zwar so, daß eine gedachte Verbindungsfläche zwischen den Längsachsen 201 und 211 bzw. 401 und 411 der Rollen eines jeden Rollenpaares 20, 21 bzw. 40, 41 immer senkrecht oder nahezu senkrecht auf der Probenoberfläche steht, und zwar während der gesamten Periode einer Biegewechselbeanspruchung der Probe 9. Somit ist eine praktisch zugspannungsfreie Durchführung eines Biegewechselbeanspruchungsversuchs an der Probe 9 möglich, die aber dennoch während des Versuchs von den Drehgelenken 1, 2, 3 und 4 sicher in einer definierten Position gehalten wird. In einer bevorzugten Ausführungsform ermöglicht die erfindungsgemäße Vorrichtung z. B. Biegestrecken von bis zu ca. ± 10 mm bei Biegekräften zwischen 0,1 N und 1000 N.

Es versteht sich, daß die Erfindung mit fachmännischem Können aus- und weitergebildet werden kann, um z. B. Forderungen nach einem fertigungsgerechten und/oder anwendungsbezogenen und/oder bedienungsfreundlichen Design zu erfüllen, oder um Proben anderer Form (z. B. Rohre) oder Dimensionen (z. b. Eisenbahnschienen) oder aus anderem Werkstoff (z. B. Stahl, Keramik) einsetzen zu können, ohne daß dies hier an dieser Stelle näher erläutert werden müßte.

So ist es z. B. denkbar, die Positionen des beweglichen Teils und des feststehenden Teils zu vertauschen und/oder die feststehenden Drehgelenke zwischen den beweglichen Drehgelenken anzuordnen.

Ferner ist es denkbar, daß die Grundplatte 10 der beiden feststehenden Drehgelenke 3 und 4 nicht am Werkstoffprüfmaschinenbett befestigt ist, sondern direkt oder über einen Zapfen, ähnlich der Platte 11 in FIG. 1, in die untere Probenaufnahme der Werkstoffprüfmaschine eingespannt ist. Damit wäre es möglich, auch den feststehenden Teil beweglich zu gestalten, so daß z.B. beide Teile der Prüfvorrichtung im prüfvorrichtungseigenen Koordinatensystem zueinander vertikale (kolineare) Bewegungen ausführen können.

Zwar ist die Prüfvorrichtung so konzipiert, daß der bewegliche Teil in dem prüfungsvorrichtungseigenen Koordinatensystem eine definierte lineare Bewegung senkrecht zum feststehenden Teil ausführt, die Prüfvorrichtung als solche kann jedoch in beliebiger Ausrichtung im Raum orientiert werden, sodaß z. B. der bewegliche Teil der Prüfvorrichtung im raum- oder werkstoffprüfmaschineneigenen Koordinatensystem z. B. auch eine horizontal linear oder eine schräg linear verlaufende Bewegung ausführen kann.

Schließlich könnten durch eine lediglich einseitige Lagerung der einzelnen Rollen und Drehgelenke in ihren Halterungen und/oder durch jeweils paarweise als bewegliche, fixierbare Schenkel ausgebildete Halterungen sowohl eine noch einfachere Herstellung als auch eine noch einfachere Bedienbarkeit erreicht werden. Insbesondere würden aufgrund dieser Maßnahmen die Platten 10 und 11 in FIG. 1 entfallen.

Die wesentlichen Vorteile der erfindungsgemäßen Prüfvorrichtung bestehen vor allem darin,
- daß es sich hierbei um eine einfache und leicht herstellbare Konstruktion einer solchen Biegewechselprüfvorrichtung handelt,
- daß die gedachte Verbindungsfläche zwischen beiden Rollen-Längsachsen jedes Rollenpaares während der gesamten Periode einer Biegewechselbeanspruchung der Probe senkrecht auf der Probenoberfläche steht, wodurch störende Nebenkräfte minimiert und kalkulierbar werden, so daß sie bei der Versuchsauswertung vernachlässigt bzw. auf einfache Weise berücksichtigt werden können,
sodaß mit der Erfindung eine kostengünstige Prüfvorrichtung geschaffen worden ist mit konstantem Biegemoment über einer größeren Probelänge, die systematische Meßfehler ausschließt und insbesondere zur Biegespannung zusätzliche Zugspannungen insbesondere in Längsrichtung und hier insbesondere für kleine Durchbiegungen der Probe eliminiert bzw. zumindest minimiert.

Weitere Vorteile der Erfindung bestehen darin,
- daß ein spielfreier Nulldurchgang gewährleistet ist;
- daß der Anpreßdruck der Rollen an die Probe für jedes Rollenpaar unabhängig von den übrigen Rollenpaaren stufenlos eingestellt werden kann;
- daß eine feine Materialabstimmung zwischen Rollen und Probe möglich ist, ohne daß sonstige Teile der Vorrichtung geändert werden müssen;
- daß eine Variation der Probengröße durch Verstellung der vorhandenen Prüfvorrichtung oder der proportionalen Vergrößerung/Verkleinerung der Vorrichtung möglich ist.

## Patentansprüche

1. Prüfvorrichtung zur Durchführung von 4-Punkt-Biegewechselbeanspruchungsversuchen, insbesondere an Leiterplatten (9), bestehend aus mehreren Lagerungen (1-4) mit Halterungen (5-8) zur Befestigung in einer Krafteinleitungsvorrichtung, insbesondere in einer Universal-Werkstoffprüfmaschine, bei der zwei in die gleiche Richtung, vorzugsweise vertikal bewegliche Lagerungen (1, 2) sich zwischen zwei feststehenden Lagerungen (3, 4) befinden oder umgekehrt, wobei die Lagerungen (1-4) jeweils eine Halterung (5-8) aufweisen, die ihrerseits jeweils ein Rollenpaar (20, 21; 40, 41) zur Führung der Probe (9) zwischen den jeweils um ihre Längsachse (201, 211; 401, 411) drehbar gelagerten Rollen der einzelnen Rollenpaare (20, 21; 40, 41) aufweisen, dadurch gekennzeichnet, daß die Lagerungen (1-4) als Drehgelenke ausgebildet sind und daß die Rollenpaare (20, 21; 40, 41) jeweils um eine gemeinsame Drehachse (13, 23, 33, 43) in der jeweils zugehörigen Halterung (5-8) drehbar gelagert sind.

2. Prüfvorrichtung nach Anspruch 1, dadurch gekennzeichnet, daß die Rollen der einzelnen Rollenpaare (20, 21; 40, 41) mit ihren Längsachsen (201, 211; 401, 411) parallel zueinander ausgerichtet sind und in der Ausgangslage in Bewegungsrichtung der beweglichen Drehgelenke (1, 2) jeweils hintereinander oder zumindest annähernd hintereinander angeordnet sind.

3. Prüfvorrichtung nach einem der vorhergehenden Ansprüche, dadurch gekennzeichnet, daß die gemeinsamen Drehachsen (13, 23, 33, 43) der einzelnen Rollenpaare (20, 21; 40, 41) jeweils mittig und parallel zu den Längsachsen (201, 211; 401, 411) der beiden Rollen des jeweils zugehörigen Rollenpaares (20, 21; 40, 41) verlaufen.

4. Prüfvorrichtung nach einem der vorhergehenden Ansprüche, dadurch gekennzeichnet, daß der Abstand der beiden Rollen eines jeden Rollenpaares (20, 21; 40, 41) für jedes Rollenpaar (20, 21; 40, 41) unabhängig von den übrigen-Rollenpaaren stufenlos einstellbar ist.

5. Prüfvorrichtung nach einem der vorhergehenden Ansprüche, dadurch gekennzeichnet, daß die Längsachsen (201, 211; 401, 411) der einzelnen Rollen (20, 21; 40, 41) jeweils in einer Führung (45, 46) in dem zugehörigen Drehgelenk (1-4) drehbar gelagert sind und gegen horizontales und/oder vertikales Ausweichen zu fixieren sind.

6. Prüfvorrichtung nach Anspruch 5, dadurch gekennzeichnet, daß die einzelnen Führungen (45, 46) jeweils als längliche Nut in den entsprechenden Seitenwänden des zugehörigen Drehgelenks (1-4) ausgebildet sind.

7. Prüfeinrichtung nach einem der vorhergehenden Ansprüche, dadurch gekennzeichnet, daß die gemeinsamen Drehachsen (13, 23, 33, 43) der einzelnen Rollenpaare (20, 21; 40, 41) jeweils aus zwei kolinear zueinander angeordneten Achsstummeln (43a, 43b) bestehen, die über die Rollenenden hinausragen und mechanisch mit den Längsachsen (401, 411) der zugehörigen Rollen (40, 41) verbunden sind und in der zugehörigen Halterung (8) drehbar gelagert sind.

8. Prüfeinrichtung nach einem der vorhergehenden Ansprüche, dadurch gekennzeichnet, daß die Lager der Rollen (20, 21; 40, 41) selbst und/oder die der gemeinsamen Drehachsen (13, 23, 33, 43) bzw. Halbachsen (43a, 43b) jeweils als Wälz- oder Gleitlager, insbesondere als Kugel- oder Nadellager ausgeführt sind.

9. Prüfvorrichtung nach einem der vorhergehenden Ansprüche, dadurch gekennzeichnet, daß die einzelnen Rollenpaare (20, 21; 40, 41) in sich und zueinander derart verstellbar gehaltert sind, daß sie eine spiel- und biegebelastungsfreie Einspannung der Probe (9) zulassen, wobei die einzelnen Fluchtlinien der gemeinsamen Drehachsen (13, 23, 33, 43) der einzelnen Rollenpaare (20, 21; 40, 41) mittig oder zumindest annähernd mittig innerhalb der zu prüfenden Probe (9) verlaufen.

10. Prüfvorrichtung nach einem der vorhergehenden Ansprüche, dadurch gekennzeichnet, daß die Halterungen (7, 8) der feststehenden Drehgelenke (3, 4) auf einer Grundplatte (10) oder einer vorzugsweise mit einem ersten Zapfen in der unteren Einspannung der Krafteinleitungsvorrichtung, vorzugsweise der Universal-Werkstoffprüfmaschine fixierten Platte befestigt sind und die Halterungen (5, 6) der beweglichen Drehgelenke (1, 2) auf einer in Bewegungsrichtung der beweglichen Drehgelenke (1, 2) beweglichen Platte (11), die vorzugsweise mit einem zweiten Zapfen (110) in der oberen Einspannung der Krafteinleitungsvorrichtung, vorzugsweise der Universal-Werkstoffprüfmaschine fixiert ist.

11. Prüfvorrichtung nach Anspruch 10, dadurch gekennzeichnet, daß die Halterungen (7, 8) der beiden feststehenden Drehgelenke (3, 4) auf der Grundplatte und die Halterungen (5, 6) der beweglichen Drehgelenke (1, 2) auf der beweglichen Platte (11) jeweils parallel zur zugehörigen Plattenoberfläche verschiebbar angeordnet sind.

12. Prüfvorrichtung nach einem der vorhergehenden Ansprüche, dadurch gekennzeichnet, daß die einzelnen Rollen (20, 21; 40, 41) und Drehgelenke (1-4) jeweils lediglich einseitig in ihren jeweiligen Halterungen (22a; 42a; 5-8) gelagert und/oder die Halterungen (5-8) jeweils paarweise als bewegliche, fixierbare Schenkel ausgebildet sind.

13. Prüfvorrichtung nach einem der vorhergehenden Ansprüche, dadurch gekennzeichnet, daß die Abstände zwischen den beiden Rollen jedes Rollenpaares (20, 21; 40, 41) durch Hilfsvorrichtungen derart veränderbar sind, daß die gemeinsame Drehachse (13, 23, 33, 43) jedes Rollenpaares (20, 21; 40, 41) stets mitten zwischen den beiden zugehörigen Rollen-Längsachsen (201, 211; 401, 411) verläuft.

## Claims

1. Test device for the performance of 4-point alternating bending load trials, in particular at printed circuit boards (9), and consisting of several bearing supports (1 to 4) with mountings (5 to 8) for fastening in a force-introducing device, in particular in a universal material-testing machine, in which two bearing supports (1, 2), which are movable in the same direction, preferably vertically, are disposed between two stationary bearings (3, 4) or conversely, wherein the bearing supports (1 to 4) each display a respective mounting (3 to 8), which mountings in their turn each display a respective roller pair (20, 21; 40, 41) for the guidance of the sample (9) between the rollers, which are each borne to be rotatable about their longitudinal axle (201, 211; 401, 411), of the individual roller pairs (20, 21; 40, 41), characterised thereby, that the bearing supports (1 to 4) are constructed as rotary joints and that the roller pairs (20, 21; 40, 41) are each borne to be rotatable about a common rotational axle (13, 23, 33, 43) in the respectively associated mounting (5 to 8).

2. Test device according to claim 1, characterised thereby, that the rollers of the individual roller pairs (20, 21; 40, 41) are oriented one parallelly to the other by their longitudinal axles (201, 211; 401, 411) and in the initial position arranged each time one behind the other or at least approximately one behind the other in the direction of movement of the movable rotary joints (1, 2).

3. Test device according to one of the preceding claims, characterised thereby, that the common rotational axles (13, 23, 33, 34) of the individual roller pairs (20, 21; 40, 41) each extend centrally of and parallelly to the longitudinal axles (201, 211; 401, 411) of both the rollers of the respectively associated roller pair (20, 21; 40, 41).

4. Test device according to one of the preceding claims, characterised thereby, that the spacing of both the rollers of each roller pair (20, 21; 40, 41) is continuously settable for each roller pair (20, 21; 40, 41) independently of the remaining roller pairs.

5. Test device according to one of the preceding claims, characterised thereby, that the longitudinal axles (201, 211; 401, 411) of the individual rollers (20, 21; 40, 41) are each borne to be rotatable in a respective guide (45, 46) in the associated rotary joint (1 to 4) and to be fixed against horizontal and/or lateral deviation.

6. Test device according to claim 5, characterised thereby, that the individual guides (45, 46) are each formed as elongate groove in the corresponding side walls of the associated rotary joint (1 to 4).

7. Test device according to one of the preceding claims, characterised thereby, that the common rotational axles (13, 23, 33, 34) of the individual roller pairs (20, 21; 40, 41) each consist of two stub axles (43a, 43b), which are arranged each colinearly with the other, project beyond the roller ends, are connected mechanically with the longitudinal axles (401, 411) of the associated rollers (40, 41) and are borne to be rotatable in the associated mounting (8).

8. Test device according to one of the preceding claims, characterised thereby, that the bearings of the rollers (20, 21; 40, 41) themselves or those of the common rotational axles (13, 23, 33, 43) or half axles (43a, 43b) are each constructed as rolling or sliding bearings, in particular as ball or needle bearings.

9. Test device according to one of the preceding claims, characterised thereby, that the individual roller pairs (20, 21; 40, 41) are mounted to be resettable individually and one relative to the other in such a manner that they permit a clamping-in of the sample (9) free of play and bending stress, wherein the individual lines of alignment of the common rotational axles (13, 23, 33, 43) of the individual roller pairs (20, 21; 40, 41) extend centrally or at least approximately centrally within the sample (9) to be tested.

10. Test device according to one of the preceding claims, characterised thereby, that the mountings (7, 8) of the stationary rotary joints (3, 4) are fastened on a base plate (10) or a plate fixed preferably by a first spigot in the lower clamping device of the force-introducing device preferably of the universal material-testing machine and the mountings (5, 6) of the movable rotary joints (1, 2) are fastened on a plate (11), which is movable in the direction of the movement of the movable rotary joints (1, 2) and which is fixed preferably by a second spigot (110) in the upper clamping device of the force-introducing device preferably of the universal material-testing machine.

11. Test device according to claim 10, characterised thereby, that the mountings (7, 8) of both the stationary rotary joints (3, 4) on the base plate and the mountings (5, 6) of the movable rotary joints (1, 2) on the movable plate (11) are each arranged to be displaceable parallelly to the associated plate surface.

12. Test device according to one of the preceding claims, characterised thereby, that the individual rollers (20, 21; 40, 41) and rotary joints (1 to 4) are each borne merely at one end in their respective mountings (22a; 42a; 5 to 8) and/or the mountings (5 to 8) are each constructed in pairs as movable and fixable limbs.

13. Test device according to one of the preceding claims, characterised thereby, that the spacings between both the rollers of each roller pair (20, 21; 40, 41) are variable by auxiliary devices in such a manner that the common rotational axle (13, 23, 33, 34) of each roller pair (20, 21; 40, 41) always extends centrally between both the associated longitudinal roller axles (201, 211, 401, 411).

## Revendications

1. Dispositif d'essai pour la mise en oeuvre d'essais par contraintes en flexion alternées à 4 points d'appui, en particulier sur des cartes imprimées (9)_{,} constitué par plusieurs éléments de montage (1 à 4) présentant des montures (5 à 8) pour la fixation dans un dispositif d'application de force, en particulier dans une machine d'essai de matériaux universelle, dans lequel deux éléments de montage (1, 2) mobiles dans la même direction, de préférence verticalement, se trouvent entre deux éléments de montage fixes (3, 4), ou inversement, dans lequel les éléments de montage (1 à 4) présentent des montures respectives (5 à 8) qui présentent à leur tour respectivement une paire de galets (20, 21 40, 41) pour guider l'échantillon (9) entre les galets des paires de galets individuelles (20, 21 ; 40, 41), qui sont montés en rotation autour de leur axe longitudinal respectif (201, 211 ; 401, 411), caractérisé en ce que les éléments de montage (1 à 4) sont réalisés sous forme d'articulations tournantes et en ce que les paires de galets (20, 21 ; 40, 41) sont montées en rotation autour d'un axe de rotation commun (13, 23, 33, 43) dans la monture respectivement associée (5 à 8).

2. Dispositif d'essai selon la revendication 1, caractérisé en ce que les galets des paires de galets individuelles (20, 21 ; 40, 41) sont dirigés, par leur axes longitudinaux (201, 211 ; 401, 411) parallèlement les uns aux autres, et en ce que dans la position de départ ils sont agencés les uns derrière les autres ou du moins approximativement les uns derrière les autres en direction de mouvement des articulations tournantes mobiles (1, 2).

3. Dispositif d'essai selon l'une ou l'autre des revendications précédentes, caractérisé en ce que les axes de rotation commun (13, 23, 33, 43) des paires de galets individuelles (20, 21 ; 40, 41) s'étendent respectivement au milieu et parallèlement aux axes longitudinaux (201, 211 ; 401, 411) des deux galets de la paire de galets respectivement associée (20, 21 ; 40, 41).

4. Dispositif d'essai selon l'une quelconque des revendications précédentes, caractérisé en ce que la distance des deux galets de chaque paire de galets (20, 21 ; 40, 41) est réglable en continu pour chaque paire de galets (20, 21 ; 40, 41) indépendamment des autres paires de galets.

5. Dispositif d'essai selon l'une quelconque des revendications précédentes, caractérisé en ce que les axes longitudinaux (201, 211 ; 401, 411) des galets individuels (20, 21 ; 40, 41) sont montés en rotation dans un guidage respectif (45, 46) dans l'articulation tournante associée (1 à 4), et en ce qu'ils peuvent être fixés à l'encontre d'une déviation horizontale et/ou verticale.

6. Dispositif d'essai selon la revendication 5, caractérisé en ce que les guidages individuels (45, 46) sont réalisés chacun sous forme d'une gorge allongée dans les parois latérales correspondantes de l'articulation tournante associée (1 à 4).

7. Dispositif d'essai selon l'une quelconque des revendications précédentes, caractérisé en ce que les axes de rotation communs (13, 23, 33, 43) des paires de galets individuelles (20, 21 ; 40, 41) sont constitués respectivement par deux bouts d'axe (43a, 43b) agencés de manière colinéaire l'un à l'autre, qui dépassent au-delà des extrémités de galet, qui sont reliés mécaniquement aux axes longitudinaux (401, 411) des galets associés (40, 41) et qui sont montés en rotation dans la monture associée (8).

8. Dispositif d'essai selon l'une quelconque des revendications précédentes, caractérisé en ce que les paliers des galets (20, 21 ; 40, 41) eux-mêmes et/ou les paliers des axes de rotation communs (13, 23, 33, 43) ou ceux des demi-axes (43a, 43b) sont réalisés respectivement sous forme d'un palier à roulement ou à coulissement, en particulier sous forme d'un roulement à billes ou à aiguilles.

9. Dispositif d'essai selon l'une quelconque des revendications précédentes, caractérisé en ce que les paires de galets individuelles (20, 21 ; 40, 41) sont retenues de façon réglable en elles-mêmes et l'une par rapport à l'autre de telle sorte qu'elles permettent un serrage de l'échantillon (9) exempt de jeu et de contrainte en flexion, les lignes d'alignement individuelles des axes de rotation communs (13, 23, 33, 43) des paires de galets individuelles (20, 21 ; 40, 41) s'étendant au milieu ou du moins approximativement au milieu à l'intérieur de l'échantillon à examiner.

10. Dispositif d'essai selon l'une quelconque des revendications précédentes, caractérisé en ce que les montures (7, 8) des articulations tournantes fixes (3, 4) sont fixées sur une plaque de base (10) ou sur une plaque fixée de préférence par un premier tenon dans le serrage inférieur du dispositif d'application de forces, de préférence de la machine d'essai de matériaux universelle, et en ce que les montures (5, 6) des articulations tournantes mobiles (1, 2) sont fixées sur une plaque (11) mobile dans une direction de mouvement des articulations tournantes mobiles (1, 2), ladite plaque étant fixée de préférence par un second tenon (110) dans le serrage supérieur du dispositif d'application de forces, de préférence de la machine d'essai de matériaux universelle.

11. Dispositif d'essai selon la revendication 10, caractérisé en ce que les montures (7, 8) des deux articulations tournantes fixes (3, 4) sont agencées sur la plaque de base, et les montures (5, 6) des articulations mobiles (1, 2) sur la plaque mobile (11), respectivement de façon mobile parallèlement à la surface de plaque associée.

12. Dispositif d'essai selon l'une quelconque des revendications précédentes, caractérisé en ce que les galets individuels (20, 21 ; 40, 41) et les articulations tournantes (1 à 4) sont montés respectivement unilatéralement dans leur montures respectives (22a ; 42a ; 5 à 8) et/ou en ce que les montures (5 à 8) sont réalisées respectivement par paire sous forme de bras mobiles susceptibles d'être fixés.

13. Dispositif d'essai selon l'une quelconque des revendications précédentes, caractérisé en ce que les distances entre les deux galets de chaque paire de galets (20, 21 ; 40, 41) peuvent être modifiées par l'intermédiaire de dispositifs auxiliaires, de telle sorte que l'axe de rotation commun (13, 23, 33, 43) de chaque paire de galets (20, 21 ; 40, 41) s'étend constamment au milieu entre les deux axes longitudinaux associés (201, 211 ; 401, 411) des galets.
